# EUROPEAN PATENT APPLICATION

(11) **EP 3 145 060 A1**
(43) Date of publication of application: **22.03.2017**
(21) Application number: 16189375.5
(22) Date of filing: 19.09.2016
(51) Int. Cl.: H02K 5/10

(54) **A MOTOR, PARTICULARLY FOR AN AUTOMOBILE WINDSCREEN WIPER MECHANISM**

(30) Priority: 21.09.2015 PL 41401815
(71) Applicant: Valeo Autosystemy SP. Z.O.O., 32-050 Skawina (PL)
(72) Inventor: ORZEL, Wojciech, 32-050 SKAWINA (PL)
(74) Representative: Callu Danseux, Violaine

(57) **Abstract**

The subject of the invention is a motor, specifically an automobile windscreen wiper mechanism, containing a casing (1,2) which defines an internal space, characterized in that the internal space of the motor is partially limited by a reversibly deforming element (5), preferably an elastic membrane (5), enabling the volume of the internal space to change under the influence of pressure exerted on the casing (1,2).

## Description

The subject of the invention is a motor, particularly for an automobile windscreen wiper mechanism. The motor which is the subject of the invention may also be utilized as a motor for windscreen washer pumps, alternators, hybrid drives, cooler fans and in other motor applications, chiefly electric motors operating in a watery or moist environment.

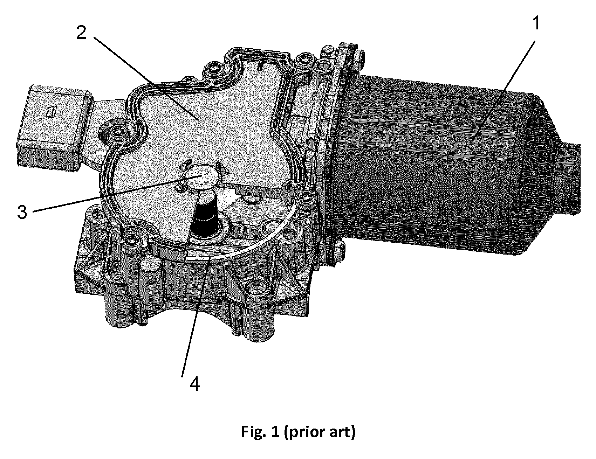

Windscreen wiper systems are driven by electric motors with a transmission system (fig. 1). In view of their function, these parts are exposed to the action of water, and consequently the motor casing (1) and the casing of the associated transmission (2) have to be protected against the eventuality of water or dust getting inside. During operation, the motor heats the air inside the casing (1, 2), thus increasing its pressure, so deaeration membranes are used (3), i.e. membranes that let through gas but do not let through dew with slight underpressure, e.g. Goretex, which enable the pressure in the casing to be lowered (by way of example, see US2013180357).

One of the major technical problems that arises when the solution described above is used is water vapour being sucked through the deaeration membrane (3) into the casing (1,2) during cooling of the motor. This vapour condenses inside the casing, and when the motor is re-started and gets warm, the condensed water begins to boil at a temperature of around 100°C, causing a sudden jump in pressure which may damage the casing seal (4).

Electric motors with a membrane that lets through gas, or with sealing using seals, are leaktight during operation usually only with minor underpressure. During operation, motors achieve high temperatures, e.g. in the case of windscreen wiper motors these are temperatures of the order of 130°C, and in the event of sudden contact with water, e.g. when the vehicle drives into a water obstacle, they rapidly cool down. When this happens the pressure inside the motor falls drastically, which often causes water to be sucked in through defects in the seal, including through a goretex membrane. Leaktightness tests on contact with water or a flow of water are governed by standards, e.g. IEC 60529, or DIN 40050-9, but they do not currently envisage tests with multiple heating and immersion of the motor in cold water during operation. Multiple heating tests and motor immersion in cold water or spraying them from every direction are conducted by some motor or vehicle manufacturers, and most of the solutions that are currently known, including motors with a vacuum inside the casing, accumulate considerable quantities of water internally during the test.

This problem has been successfully solved by providing the potential to adjust the pressure inside the motor using a reversibly deforming element which enables the volume of the internal space to be enlarged by deformation of this element under the influence of the pressure exerted on the casing.

The essence of the invention is a motor, particularly for an automobile windscreen wiper mechanism, which contains a casing which defines the internal space, characterized in that the internal space of the motor is partially limited by a reversibly deforming element which enables the volume of the space inside the motor to be altered under the influence of the pressure exerted on the casing.

Preferably the motor contains a transmission casing and a motor casing where the reversibly deforming element is on the transmission casing and/or on the motor casing and/or between the motor casing and the transmission casing.

Preferably the reversibly deforming element is made of a material that does not allow air to pass through, preferably an elastomer.

Preferably the reversibly deforming element is an elastic membrane.

Preferably the motor contains a blocking element preventing ingestion of the elastic membrane into the inside of the casing.

Preferably the blocking element is located on the transmission casing and/or on the motor casing and/or between the motor casing and the transmission casing.

Preferably the motor contains a rigid casing part and a reversibly deforming element, preferably an elastic membrane, sealing off the space inside the motor and enabling the volume of the space inside the motor to be enlarged by deformation of the reversibly deforming element under the influence of the pressure exerted on the casing by the gas which is inside it.

Preferably the motor contains a blocking element in the form of a tongue fastened to the inside surface of the rigid part of the casing and at least partially located in the inside diameter of the opening in the rigid part of the casing, which is covered by the reversibly deforming element in the form of an elastic membrane.

Preferably in the part that is located in the inside diameter of the opening the blocking element possesses openings.

Preferably the reversibly deforming element is an elastic membrane fastened to the cover and/or on the bottom element of the rigid part of the transmission casing.

Preferably the reversibly deforming element is an elastic membrane fastened inside the rigid part of the casing and attached to the inside surface of the rigid part of the casing and/or to the walls forming the equalizing tank (9) around the opening in the rigid part of the casing, attached to or constituting part of the internal surface of the rigid part of the casing.

Preferably the reversibly deforming element forms the lid of the rigid part of the transmission casing.

Through use of a reversibly deforming element it is possible to control the pressure inside the motor and lower the risk of seal failure. This is responsible for a drastic reduction in gas exchange between the internal space and the environment surrounding it - water does not get inside in the form of water vapour, or else gets in in a small quantity (through defects in the seal arising, for example, during use or while under load). The pressure inside the casing is adjusted by an increase in the volume caused by deformation of the reversibly deforming element under pressure exerted by the gas which is located in the space inside the motor.

Because there are no pressure jumps caused by the boiling of water that has got inside in such a motor, the seal for such a casing may be designed to be less resistant to pressure or underpressure in its internal space (and thus less expensive) than the seals used in solutions with a deaerating watertight membrane or those sealed using permanent sealing elements.

The invention will now be presented in more detail in favourable examples of its manufacture, with reference to the appended figures, where:
- fig. 2: shows a motor with a casing containing an elastic membrane,
- fig. 3: shows a motor with an elastic membrane at the moment of a pressure jump,
- figs 4-7: show different variants of location of the elastic membrane on the motor casing and on the transmission casing,
- figs 8-10: show different variants of fastening the elastic membrane to the casing,
- figs 11-12: show the blocking element preventing ingestion of the elastic membrane into the inside of the casing,
- fig. 13: shows a motor with membrane fastened inside the casing,
- fig. 14: shows a membrane in the equalizing tank, the walls of the tank being attached to the rigid part of the casing,
- fig. 15: shows a membrane in an equalizing tank created by the wall and the rigid part of the casing.

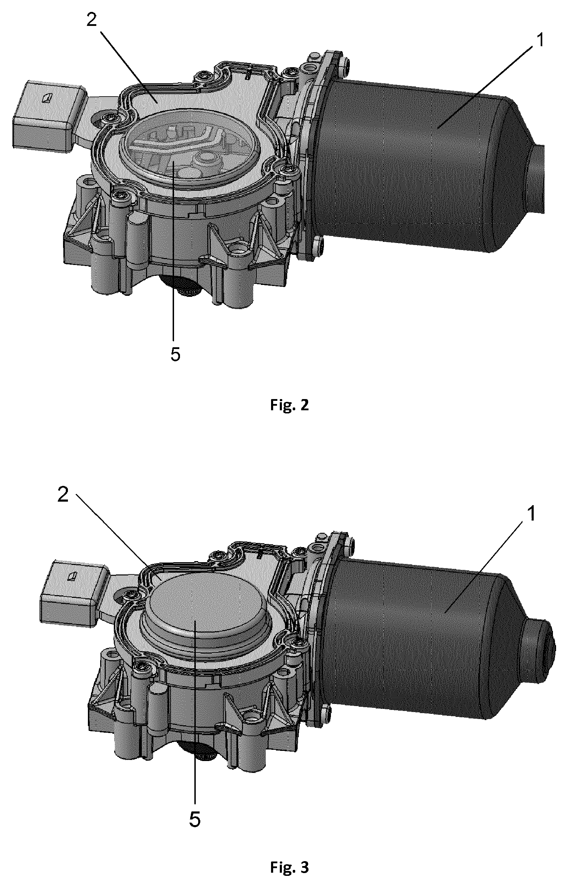

Fig. 2 shows a motor for an automobile windscreen wiper mechanism with a transmission cover (2) containing a rigid part and an elastic membrane (5) fastened on the lid of the box casing. During operation the motor heats the air inside the sealed casing system - the motor casing and the transmission casing. The air pressure increases and, acting on the casing and the reversibly deforming element (5), causes it to deform, with a resultant enlargement in the volume of gas and a reduction in pressure (fig. 3). When the motor is switched off and has cooled, the membrane returns to its initial position (fig. 2).

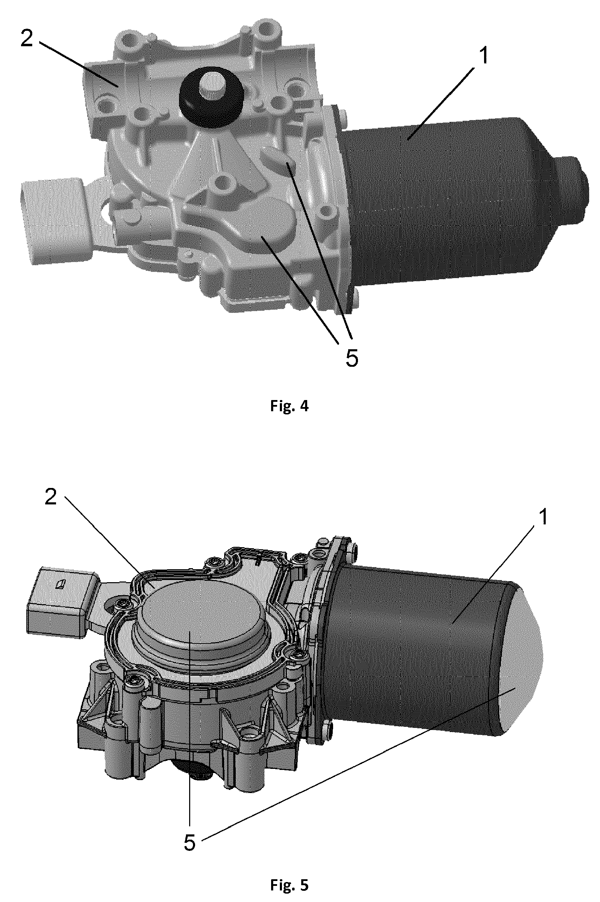

Fig. 4 illustrates an example of a version in which two elastic membranes (5) are fastened to the bottom element of the rigid part of the transmission casing (2). This membrane location is favourable in view of the packaging, i.e. membrane operation in this area does not entail a need to design a greater amount of space for the transmission and motor system.

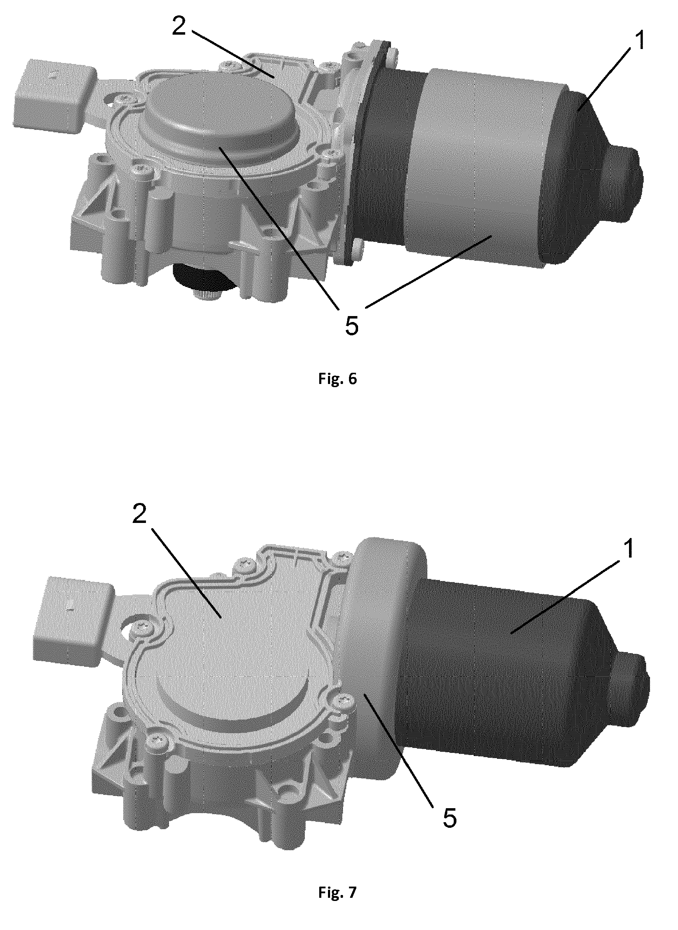

Fig. 5 and fig. 6 illustrate sample variants of a motor in which both the transmission casing (2) and the motor casing (1) contain an elastic membrane.

Fig. 7 illustrates a motor in which the seal between transmission casing (2) and motor casing (1) is an elastic membrane (5).

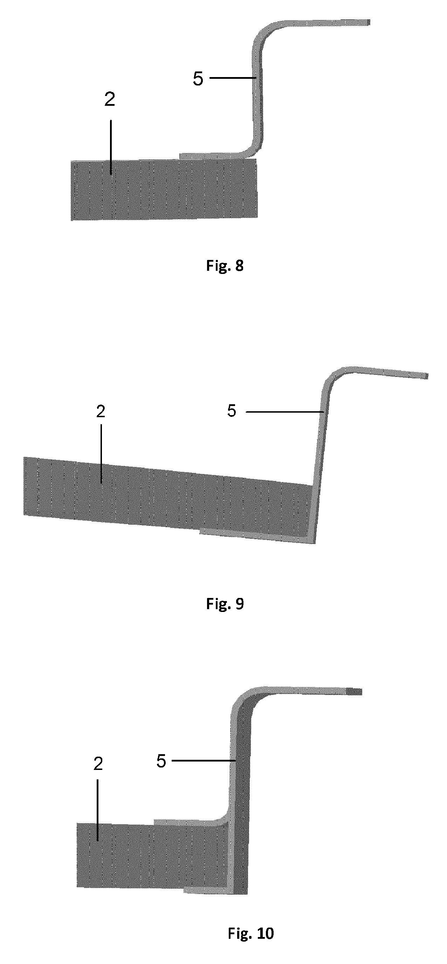

Figs 8-10 show different variants of fastening of membrane to casing. The membrane may be fastened to the inside (fig. 8), the outside (fig. 9) or to both (fig. 10) surfaces of the rigid part of the transmission casing (2) or the motor casing (1).

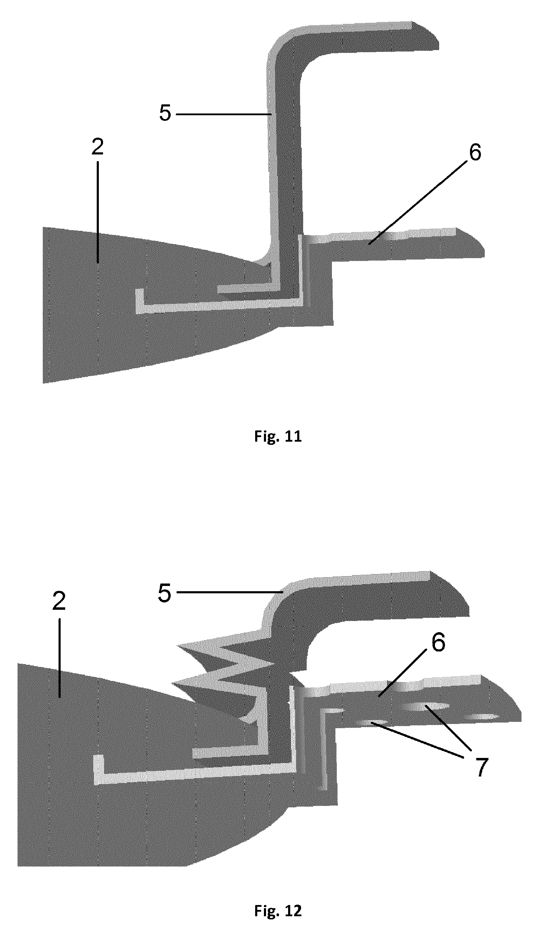

Fig. 11 shows a blocking element (6) preventing ingestion of the elastic membrane (5) into the inside of the casing, in the form of a tongue (6) fastened to the internal surface of the rigid part (1,2) of the casing and partially located in the inside diameter of the opening, which covers the elastic membrane (5). The blocking element (6) may preferably possess openings (7), as illustrated in fig. 12, facilitating the flow of air in the space between the interior of the casing and the membrane.

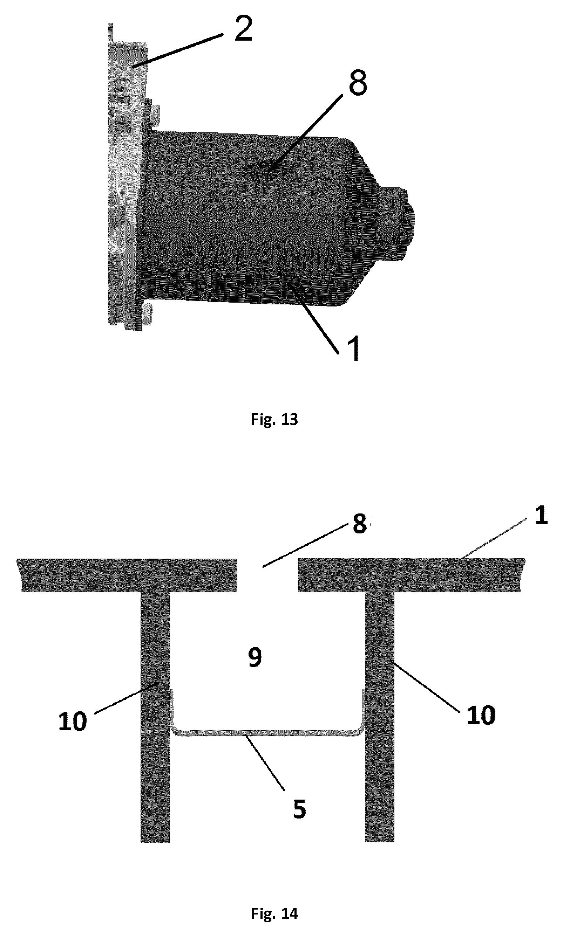

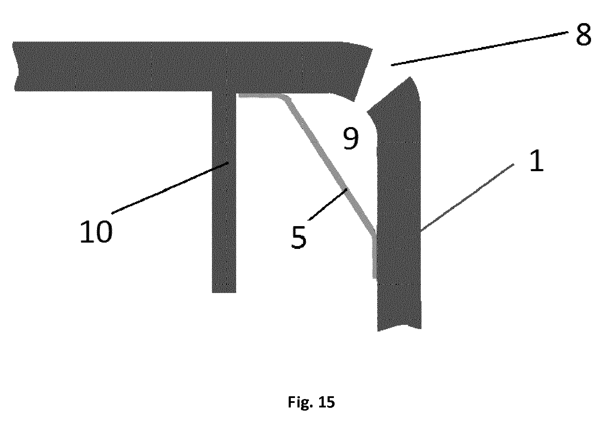

The membrane may also be fastened inside the casing of the transmission (2) and/or the motor (1) (figs 13-15). The membrane may be attached to the inside surface of the rigid part of the casing. Around the opening in the casing (8) an equalizing tank may also be created (9). The walls of the equalizing tank may be attached to the inside surface of the rigid part of the casing (fig. 14) or may be a part of the casing (fig. 15). An elastic membrane (5) is fastened to the walls of the equalizing tank (9). As a result of this, movement of the membrane (5) is restricted to a previously set space.

In another, non-illustrated example, the reversibly deforming element (5) is not a membrane, but a rigid element, which may take at least two positions - concave (in the direction of the internal space of the motor) and convex, like the caps for jars of the "twist-off click" type, fitted with an element used to check whether the jar, and especially one containing food products, has been opened (known as a *safety button* in English). Such an element may be located on the transmission casing (2) or the motor casing (1), or constitute a tongue on the rigid part of the transmission box casing (2).

The examples shown do not narrow the scope of the required protection down only to motors for an automobile windscreen wiper mechanism. Motors as in the invention may find application in any place where it is best to protect a motor from moisture.

## Claims

1. Motor, specifically for a vehicle windscreen wiper mechanism, containing a casing (1,2), which defines an internal space, **characterized in that** the motor's internal space is partially limited by a reversibly deforming element (5) enabling the volume of the internal space to be varied under the influence of pressure exerted on the casing (1,2).

2. Motor according to Claim 1, **characterized in that** it contains a transmission casing (2) and a motor casing (1), where the reversibly deforming element (5) is located on the casing of the transmission (2) and/or on the motor casing (1) and/or between the motor casing (1) and the transmission casing (2).

3. Motor according to Claim 1 or 2, **characterized in that** the reversibly deforming element (5) is made of a material that does not allow air through, preferably an elastomer.

4. Motor according to Claim 1 or 2 or 3, **characterized in that** the reversibly deforming element (5) is an elastic membrane (5).

5. Motor according to Claim 4, **characterized in that** it contains a blocking element (6) preventing ingestion of the elastic membrane (5) into the inside of the casing.

6. Motor according to Claim 5, **characterized in that** the blocking element (6) is located on the casing of the transmission (2) and/or on the casing of the motor (1) and/or between the casing of the motor (1) and the casing of the transmission (2).

7. Motor according to any of the preceding claims, **characterized in that** it contains a rigid part of the casing and a reversibly deforming element (5), preferably an elastic membrane (5) which seals the internal space of the motor and enables the volume of the internal space to be increased by deformation of the reversibly deforming element (5) under the influence of pressure exerted on the casing by gas which is inside it.

8. Motor according to Claim 7, **characterized in that** it contains a blocking element (6) in the form of a tongue (6) fastened to the inside surface of the rigid part of the casing and at least partially located in the inside diameter of the opening in the rigid part of the casing, which is covered by the reversibly deforming element (5) in the form of an elastic membrane (5).

9. Motor according to Claim 8, **characterized in that** in the part which is located in the inside diameter the blocking element (6) possesses openings (7).

10. Windscreen wiper motor according to Claim 7 or 8 or 9, **characterized in that** the reversibly deforming element (5) is an elastic membrane (5) fastened to the cover and/or to the bottom element of the rigid part of the casing of the transmission (2).

11. Motor according to Claim 7 or 8 or 9, **characterized in that** the reversibly deforming element (5) is an elastic membrane (5) fastened inside the rigid part of the casing and attached to the inner surface of the rigid part of the casing and/or to the walls forming the equalizing tank (9) around the opening (8) in the rigid part of the casing, attached to or forming part of the internal surface of the rigid casing.

12. Windscreen wiper motor according to Claim 7 or 8 or 9, **characterized in that** the reversibly deforming element (5) forms a cover for the rigid part of the casing of the transmission (2).
